# EUROPÄISCHE PATENTSCHRIFT

(11) **EP 0 825 062 B1**
(45) Veröffentlichungstag und Bekanntmachung des Hinweises auf die Patenterteilung: **20.02.2002**
(21) Anmeldenummer: 97810534.4
(22) Anmeldetag: 25.07.1997
(51) Int. Cl.: B60P 1/44

(54) **Profilpaarung aus Leichtmetall**
Mating profiles from light-alloy
Profilés en alliage léger avec rebords complémentaires

(30) Priorität: 22.08.1996 DE 29614329 U
(43) Veröffentlichungstag der Anmeldung: 25.02.1998
(73) Patentinhaber: Peter Maier Leichtbau GmbH, 78224 Singen (DE)
(72) Erfinder: Kemen, Hans-Jörgen, 78224 Singen (DE); Maier, Peter, 78256 Streisslingen (DE)
(74) Vertreter: Weiss, Peter, Dr. rer.nat.

(56) Entgegenhaltungen:
- DE-A- 1 534 278
- DE-A- 2 313 458
- DE-A- 3 538 188
- DE-U- 7 241 445
- FR-A- 2 746 481

## Beschreibung

Die Erfindung betrifft eine Profilpaarung aus Leichtmetall -- insbesondere aus einer Aluminiumlegierung stranggepreßte Plattformprofile für eine Ladebordwand eines Fahrzeuges --, bei der zumindest ein stegartiges Verbindungsteil des einen Profiles in flächige Berührung mit einem Verbindungsteil des anderen Profils gebracht wird und anschließend die Teile miteinander verbunden -- bevorzugt verschweißt -- werden.

Eine solche Profilpaarung ist der EP-A-0 081 115 zu entnehmen, welche eine einseitig anhängbare Fahrzeug-Hubwand mit trogförmigem Anschlußprofil zeigt, das an seiner offenen Seite von den Enden der quer zu ihm langgelegten Plattformprofile abgedeckt und mit abkragenden Anschlußlaschen ausgerüstet ist. Die flachen Plattformprofile aus Leichtmetall sind mit ihren Längskanten flächig aneinandergelegt und verschweißt. Die Anschlußlaschen bieten Bohrungen als Augen für Gelenkbolzen an. Das trogförmige Anschlußprofil soll mittels Schrauben an den Enden der Plattformprofile festliegen.

Zudem werden Flächenverbindungen für Leichtmetallteile im "Aluminium-Taschenbuch" Düsseldof 1974, 13. Auflage, Seite 830, beschrieben. Diese Literaturstelle erwähnt zudem auf Seite 827 sog. Stumpfnahtverbindungen mit Schweißfuge und Badsicherung für Strangpreßprofile.

Ein Mangel beim bisherigen Verbinden von Profilpaarungen ist in dem Zwang genauer Ausrichtung der zu verbindenden Teile zueinander zu sehen. Dieses Problem zu beseitigen sowie gegebenenfalls zusätzliche Schweißhilfen anzubieten, hat sich der Erfinder zum Ziel gesetzt.

Zur Lösung dieser Aufgabe führt die Lehre des unabhängigen Anspruches; die Unteransprüche geben günstige Weiterbildungen an.

Erfindungsgemäß ist dem -- zur benachbarten Profiloberfläche parallelen -- Verbindungsteil des einen Profils in Abstand eine mit diesem Verbindungsteil eine Einsatznut begrenzende Anformugn zugeordnet, wobei sich die Einsatznut -- zum Einrichten während des Einsetzens des stegartigen Verbindungsteils des anderen Profils -- nach außen querschnittlich erweitert. Hierzu soll die Anformung eine vom zugeordneten Verbindungsteil querschnittlich weg gekrümmte Lippenleiste sein.

Nach einem weiteren Merkmal der Erfindung weist die Lippenleiste am Nutengrund einen zu diesem etwa rechtwinkeligen Abschnitt auf, der nach einer Querschnittslänge in einen teilkreisförmig gekrümmten Abschnitt übergeht.

Dank dieser Maßgaben kann eine problemlose Einrichtung der beiden Verbindungsteile zueinander erfolgen; die Lippenleiste führt das anstoßende stegartige Teil in die Einsatznut ein, ohne daß es zusätzlicher Hilfen bedürfte.

Da die parallelen Profile bevorzugt verschweißt werden, hat sich für den Schweißvorgang als günstige Unterstützung erwiesen, die Anschlußrippe mit der Lippenleiste als sog. Schweißfuge zu gestalten, der die Einsatzleiste des benachbarten Profils als sog. Badstütze zugeordnet ist. Dank dieser Maßgabe kann ein Versetzen der thermisch beeinfißten Partner verhindert werden; Anschlußrippe und Lippenleiste nehmen die Einsatzleiste in sich auf -- wie dies etwa beim Kalt- und Warmpreßschweißen von Leichtmetall zum Fügen von Strangpreßprofilen seit langem bekannt ist --, und die Einsatzleiste verhindert zudem das Abfließen von Schweißgut aus der Schweißfuge beim thermischen Verbinden.

Diesem Zwecke dient auch, daß Anschlußrippe und/oder Lippenleiste und/oder jener stegartige Teil mit wenigstens einer Hinterschneidung für die Schweißfuge ausgestattet sind/ist.

Insgesamt wird die vom Erfinder gesehene Aufgabe durch die Ausbildung der Verbindungsteile und deren Abstimmung aufeinander in bestechender Weise gelöst. Zusätzliche Hilfe bietet die erwähnte Schweißfuge mit ihrer Badstütze.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Seitenansicht einer sich längsschnittlich verjüngenden Ladeborwand;
- Fig. 2:: einen vergrößerten Ausschnitt aus Fig. 1;
- Fig. 3:: ein gegenüber Fig. 2 vergrößertes Detail in Schrägsicht;
- Fig. 4, 5:: jeweils eine Seitenansicht weiterer Ausführungsformen des Details nach Fig. 3.

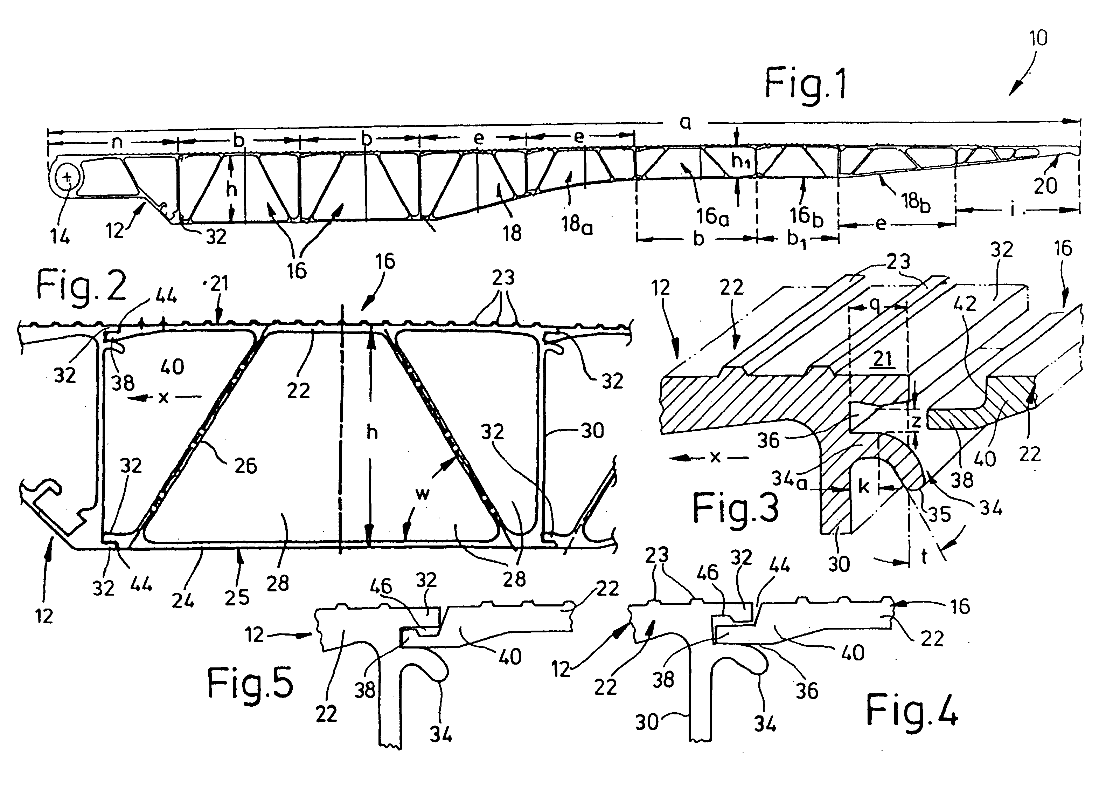

Eine Ladebordwand 10 der Gesamthöhe a ist beispielsweise aus einem -- zu einem nicht weiter dargestellten Lastwagenaufbau gerichteten -- Anschlußprofil 12 mit Achsauge 14, zwei querschnittlich etwa rechteckigen Plattformprofilen 16 der jeweiligen Breite b und gleichbleibender Höhe h, zwei in Fig. 1 nach rechts anschließenden Plattformprofilen 18, 18ₐ konischen Querschnittes der Breite e, zwei weiteren querschnittlich rechteckigen Profilen 16ₐ, 16_{b} der -- ebenfalls gleichbleibenden -- Höhe h₁ sowie unterschiedlicher Breiten b, b₁ einem anschließenden konischen Profils 18_{b} und einer heckwärtigen Auffahrzunge 20 zusammengesetzt. Nicht erkennbar sind seitliche Flankenelemente, welche das Anschlußprofil 12 sowie zumindest die Plattformprofile 16, 16ₐ, 16_{b} und 18, 18ₐ, 18_{b} beidseits abdecken.

Die Breite b der dem Anschlußprofil 12 benachbarten Plattformprofile 16 mißt hier 200 mm, die Breite e der konischen Plattformprofile 18, 18ₐ, 18_{b} jeweils etwa 180 mm, die Breite i des Endbereiches aus einem in Fig. 1 rechten konischen Plattformprofil samt Auffahrzunge 20 etwa 420 mm sowie die Breite n des Anschlußprofils 12 hier 220 mm.

Die Plattformprofile 16, 16ₐ, 16_{b} und 18, 18ₐ, 18_{b} sind aus einer Aluminiumlegierung als stranggepreßte Hohlkammerprofile gefertigt mit jeweils einer Firstwand 22 als Obergurt sowie einer Bodenwand 24 als Untergurt. Firstwand 22 und Bodenwand 24 sind zum einen durch zueinander -- in einem Winkel w zur Bodenwand 24 -- geneigte Querstege 26 verbunden, die eine Innenkammer 28 begrenzen, sowie anderseits durch eine in Fig. 2 an der rechten Profilseite liegende Stegwand 30. Die Firstwand 22 ist an ihrer Außenfläche 21 mit angeformten Querrippen 23 als Rutschsicherung versehen.

Jedes der beschriebenen Hohlkammerprofile 16, 16ₐ, 16_{b} und 18, 18ₐ, 18_{b} weist -- wie vor allem Fig. 3 verdeutlicht -- an einem Profilende die zur Firstwand 22 rechtwinkelige Stegwand 30 auf, von der -- mit den Außenflächen 21, 25 von First- und Bodenwand 22 und 24 fluchtend -- zwei parallele Anschlußrippen 32 der Länge q abragen. Die an die Stegwand 30 angeformte obere Anschlußrippe 32 begrenzt mit einer dazu in Abstand etwa parallel an der Stegwand 30 ansetzenden Lippenleiste 34 eine querschnittlich sich nach außen hin erweiternden Einsatznut 36 der Breite z für eine Einsatznase 38 des hier anzuschließenden Plattformprofils 16. Die innenliegende Lippenleiste 34 ist -- unter Bildung einer Art von sich gegen Einschubrichtung x öffnenden leistenlangem Einzugstrichter -- querschnittlich nach außen gebogen, um die einzuschiebene Einsatznase 38 besser erfassen und ausrichten zu können. Gemäß Fig. 3 setzt sich der Querschnitt der Lippenleiste 34 aus einem zur Stegwand 30 rechtwinkeligen Abschnitt 34ₐ der Breite k und einem teilkreisförmig gebogenem Endstück 35 zusammen, das mit der Stegwand 30 einen Winkel t von etwa 30° einschließt.

Die Einsatznase 38 ist Teil einer aus dem.Obergurt oder der Firstwand 22 endwärts verdickt herausgeformten Endleiste 40, die gemäß Fig. 3 einen Schulterabsatz 42 für die obere der Anschlußrippen 32 der benachbarten First- oder Bodenwand 22 oder 24 anbietet. An der von der Anschlußrippe 32 und dem Schulterabsatz 42 gebildeten Stoßlinie 44 sind die Hohlkammerprofile 12, 16, 16ₐ, 16_{b} bzw. 18, 18ₐ, 18_{b} -- wie auch die Auffahrzungen 20 -- in Gebrauchsstellung verschweißt.

Die Anschlußrippe 32 bildet mit der parallelen Lippenleiste 34 zudem eine Gabelstütze, in die jene Einsatznase 38 als Badstütze eingeschoben wird; sie dient während eines Schweißvorganges zur Stützung des flüssigen Metalls zwischen den Partnern und hält das Abfließen flüssigen Schweißzusatzwerkstoffes aus der Einsatznut 36 bzw. aus einer in der oberen Anschlußrippe 32 (Fig. 4) oder der Einsatznase 38 (Fig. 5) erkennbaren Hinterschneidung 46 hintan.

## Patentansprüche

1. Profilpaarung aus Leichtmetall, insbesondere aus einer Aluminiumlegierung stranggepresste Plattformprofile (12, 16, 18) für eine Ladebordwand (10) eines Fahrzeuges, bei der zumindest ein stegartiges Verbindungsteil (38) des einen Profils (16) in flächige Berührung mit einem Verbindungsteil (32) des anderen Profils (12) gebracht wird und anschliessend die Teile (32, 38) miteinander verbunden, insbesondere verschweisst, werden,
**dadurch gekennzeichnet,**
**dass** dem Verbindungsteil (32) des einen Profils (12) in Abstand z eine mit diesem Verbindungsteil eine Einsatznut (36) begrenzende Anformung (34) zugeordnet ist, wobei sich die Einsatznut (36) zum Einrichten während des Einsetzvorganges für das stegartige Verbindungsteil (38) des anderen Profils (16) nach aussen querschnittlich erweitert.

2. Profilpaarung nach Anspruch 1, **dadurch gekennzeichnet, dass** die Anformung eine vom zugeordneten Verbindungsteil (32) querschnittlich weg gekrümmte Lippenleiste (34) ist.

3. Profilpaarung nach Anspruch 1 oder 2, **dadurch gekennzeichnet, dass** das Verbindungsteil (32) des einen Profils (12) und das Verbindungsteil (38) des anderen Profils (16) zu den benachbarten Profiloberflächen (21) parallel verlaufen.

4. Profilpaarung nach einem der Ansprüche 1 bis 3, **dadurch gekennzeichnet, dass** die Lippenleiste (34) am Nutengrund einen zu diesem etwa rechtwinkeligen Abschnitt (34, 34ₐ) aufweist, der nach einer Querschnittslänge k in einen teilkreisförmig gekrümmten Abschnitt (35) übergeht.

5. Profilpaarung nach einem der Ansprüche 1 bis 4, **gekennzeichnet durch** einen spitzen Winkel t zwischen der die Lippenleiste (34) tragenden Stegwand (30) des Profils (12, 16, 18) und dem teilkreisförmig gekrümmten Abschnitt (35) der Lippenleiste.

6. Profilpaarung nach wenigstens einem der Ansprüche 1 bis 5, **dadurch gekennzeichnet, dass** die als Anschlussrippe (32) ausgebildete Anformung mit der Lippenleiste (34) des Profils (12, 16, 18) eine Schweissfuge (44) bildet, welcher der stegartige Einsatzteil (38) des benachbarten Profils als Stütze zugeordnet ist.

7. Profilpaarung nach Anspruch 6, **dadurch gekennzeichnet, dass** Anschlussrippe (32) und/oder Lippenleiste (34) und/oder der stegartige Teil (32) mit wenigstens einer Hinterschneidung (46) für die Schweissfuge ausgestattet sind/ist.

8. Profilpaarung nach wenigstens einem der Ansprüche 1 bis 7, **dadurch gekennzeichnet, dass** zumindest eines der Profile (16) als Hohlprofil mit gleichbleibender Anschlusshöhe h, h₁ ausgebildet ist.

9. Profilpaarung nach wenigstens einem der Ansprüche 1 bis 7, **dadurch gekennzeichnet, dass** zumindest eines der Profile (18) als sich querschnittlich verjüngendes Hohlprofil ausgebildet ist.

10. Profilpaarung nach Anspruch 8, **dadurch gekennzeichnet, dass** die Verbindungsteile (32, 38) parallel zum Obergurt (22) des Hohlprofils (16, 18) verlaufen.

## Claims

1. Means for mating profiles formed from light metal, more especially platform profiles (12, 16, 18) extruded from an aluminium alloy for a loading tailgate (10) of a vehicle, in which means at least one web-like connecting part (38) of one profile (16) is brought into flat contact with a connecting part (32) of the other profile (12), and subsequently the parts (32, 38) are interconnected, more especially welded, **characterised in that**, associated with the connecting part (32) of one profile (12) and at a spacing z therefrom, there is a moulding (34) which defines an insert groove (36) with this connecting part, the insert groove (36) widening outwardly in cross-section for installation purposes during the insertion operation for the web-like connecting part (38) of the other profile (16).

2. Means for mating profiles according to claim 1, **characterised in that** the moulding is an edge bar (34) which, in cross-section, is curved away from the associated connecting part (32).

3. Means for mating profiles according to claim 1 or 2, **characterised in that** the connecting part (32) of one profile (12) and the connecting part (38) of the other profile (16) extend parallel to the adjacent profile surfaces (21).

4. Means for mating profiles according to one of claims 1 to 3, **characterised in that** the edge bar (34) has, on the groove base, a portion (34, 34ₐ) substantially at right angles thereto which, after a cross-sectional length k, runs into a partially circularly curved portion (35).

5. Means for mating profiles according to one of claims 1 to 4, **characterised by** an acute angle t between the web wall (30) of the profile (12, 16, 18), carrying the edge bar (34), and the partially circularly curved portion (35) of the edge bar.

6. Means for mating profiles according to at least one of claims 1 to 5, **characterised in that** the moulding, configured as a communicating rib (32), forms a welded joint (44) with the edge bar (34) of the profile (12, 16, 18), which welded joint has associated therewith, as a support, the web-like insert part (38) of the adjacent profile.

7. Means for mating profiles according to claim 6, **characterised in that** communicating rib (32) and/or edge bar (34) and/or the web-like part (32) are/is provided with at least one undercut portion (46) for the welded joint.

8. Means for mating profiles according to at least one of claims 1 to 7, **characterised in that** at least one of the profiles (16) is configured as a hollow profile with a constant connecting height h, h₁.

9. Means for mating profiles according to at least one of claims 1 to 7, **characterised in that** at least one of the profiles (18) is configured as a hollow profile which tapers in cross-section.

10. Means for mating profiles according to claim 8, **characterised in that** the connecting parts (32, 38) extend parallel to the upper flange (22) of the hollow profile (16, 18).

## Revendications

1. Profilés appariés en alliage léger, en particuliers profilés à plate-forme (12, 16, 18), extrudés en alliage d'aluminium pour réaliser un hayon de charge (10) d'un véhicule, dans lequel au moins une partie de liaison (38) en forme de barrette d'un profilé (16) est amenée en contact plat avec une partie de liaison (32) de l'autre profilé (12), les parties (32, 38) étant ensuite reliées entre elles, en particulier soudées,
**caractérisés en ce que**
à la partie de liaison (32) d'un profilé (12) est associée à une distance Z une moulure (34) délimitant avec cette partie (32) une rainure d'insertion (36) qui, pour permettre d'orienter pendant sa mise en place la partie de liaison (38) en forme de barrette appartenant à l'autre profilé (16), présente une section élargie vers l'extérieur.

2. Profilés selon la revendication 1,
**caractérisés en ce que**
la moulure est une barrette en lèvre (34) présentant une section recourbée s'éloignant de la partie de liaison associée (32).

3. °] Profilés selon la revendication 1 ou 2,
**caractérisés en ce que**
la partie de liaison (32) d'un profilé (12) et la partie de liaison (38) de l'autre profilé (16) sont parallèles aux surfaces voisines (21) des profilés.

4. Profllés selon les revendications 1 à 3,
**caractérisés en ce que**
la lèvre (34) présente sur le fond de la rainure une partie (34, 34a), à peu près perpendiculaire à ce fond et se poursuivant par une partie recourbée (35) en arc de cercle sur une longueur en section k.

5. Profilés selon une des revendications 1 à 4,
**caractérisés en ce que**
la paroi (30) du profilé (12, 16, 18) portant la lèvre (34) fait un angle aigu t avec la partie recourbée (35) en arc de cercle de la lèvre.

6. Profilés selon au moins une des revendications là 5,
**caractérisés en ce que**
la moulure constituant la nervure de raccordement (32) forme avec la lèvre (34) du profil (12, 16, 18) une rainure de soudage (44) à laquelle est associée en tant que soutien la partie d'insertion (38) en forme de barrette du profilé voisin.

7. Profilés selon la revendication 6,
**caractérisés en ce que**
la nervure de raccordement (32) et/ou la lèvre (34) et/ou la partie en forme de barrette (38) comporte au moins une contre-dépouille (46) pour la rainure de soudure.

8. Profilés selon au moins l'une des revendications 1 à 7,
**caractérisés en ce qu'**
au moins un des profilés (16) est un profilé creux présentant une hauteur de raccordement constante h, h1.

9. Profilés selon au moins l'une des revendications 1 à 7,
**caractérisés en ce qu'**
au moins un des profilés (18) est un profilé creux dont la section va en se réduisant.

10. Profilés selon la revendication 8,
**caractérisés en ce que**
les parties de liaison (32, 38) sont parallèles à la membrure supérieure (22) du profilé creux (16, 18).
